# EUROPÄISCHE PATENTANMELDUNG

(11) **EP 2 312 035 A1**
(43) Veröffentlichungstag der Anmeldung: **20.04.2011**
(21) Anmeldenummer: 10008008.4
(22) Anmeldetag: 30.07.2010
(51) Int. Cl.: D06B 5/08, F16L 11/08

(54) **Textil- bzw Geflechtsschlauch und Verfahren zu dessen Imprägnierung**

(30) Priorität: 13.10.2009 DE 102009049176
(71) Anmelder: VERITAS AG, 63571 Gelnhausen (DE)
(72) Erfinder: Daumas, Alexandre, 63589 Linsengericht (DE); Knopp, Matthias, 63526 Erlensee (DE)
(74) Vertreter: Grünecker, Kinkeldey, Stockmair & Schwanhäusser Anwaltssozietät

(57) **Zusammenfassung**

Die Erfindung betrifft einen Textil- bzw. Geflechtsschlauch sowie ein Verfahren zu dessen Imprägnierung. Um eine optimale Flottenaufnahme sicherzustellen, wird der Textil- oder Geflechtsschlauch in einem Zustand imprägniert, in welchem der Flechtwinkel von 30 bis 45° beträgt. Weiterhin ist vorgesehen, dass ein mit einem Dehnungsbegrenzungsmittel versehener Textilschlauch bereitgestellt und imprägniert wird.

## Beschreibung

Die Erfindung betrifft einen Textil- bzw. Geflechtsschlauch sowie ein Verfahren zu dessen Imprägnierung. Dabei wird der Textil- bzw. Geflechtsschlauch beispielsweise mit einer kautschukartigen Beschichtung beschichtet.

Bei Beschichtungsverfahren ergeben sich unterschiedliche Problemstellungen, die in verschiedenen Dokumenten beschrieben sind. So zeigt zum Beispiel die DE 24 37 658 einen Lösungsansatz für die Problematik, dass das Gewebe während der Badführung und im anschließenden Trocknungsprozess geweitet werden muss. Das Weiten ist notwendig, um den Schlauch auch zwischen dem Garn mit Beschichtungswerkstoff zu benetzen. Die vorgeschlagene Lösung aus dem Stand der Technik umfasst eine Spreizanordnung, die in den Schlauch eingeführt wird. Üblicherweise werden derartige Spreizvorrichtungen als schwimmende Dorne ausgelegt. Dabei umgeht diese Lösung schon die aus dem Stand der Technik bekannten Probleme. Diese Aufspreizvorrichtungen weiten den Schlauch auf seinen Nenndurchmesser auf, um die für dieses Verfahren typische Randbildungen (Bugbildung) und Querschnittsverformungen zu vermeiden. Dabei muss besonders darauf geachtet werden, dass die Zugkraft, die aus der Verformung des Schlauches aufgrund der Spreizvorrichtung resultiert, nicht zu groß wird. Dies würde dazu führen, dass das Gewebe sich zusammenzieht und nicht vollständig mit dem Beschichtungswerkstoff benetzt wird und nahezu jede Elastizität verliert.

Eine andere Erfindung, die in der DE 36 19 853 beschrieben wird, benutzt Druckluft, um den Schlauch nach der ersten Foulardierstufe aufzublasen. Anschließend erfolgt ein nun bugfreies Aufziehen der Flotte.

Die DE 30 29 331 zeigt einen Lösungsansatz, wie das Gewebe entlastet werden kann, um eine Verdichtung durch das Eigengewicht zu vermeiden. Dazu verwendet die Erfindung eine Anhubvorrichtung, deren beide Walzen mit einer höheren Geschwindigkeit rotieren als die Quetscheinheit. Es entsteht eine Kraft, die der Gravitation entgegenwirkt und den Schlauch dadurch gewichtsentlastet.

Die heute bekannten Geflechtschläuche weisen keine Elastizität auf, da das komplette Geflecht mit Imprägniermittel durchsetzt ist, und da sie während des Imprägnierens unter Zug stehen und entsprechend axial gedehnt sind. Alle vorab genannten Verfahren oder Vorrichtungen zeigen jedoch keine Lösung, um in einem einzigen kontinuierlichen Arbeitsgang ein kontrolliertes Imprägnieren des Textilschlauchs zu ermöglichen und eine Restdehnung in Axialrichtung einzustellen. Der Erfindung liegt die Aufgabe zugrunde, einen Textil- oder Geflechtsschlauch sowie ein Verfahren zu dessen Imprägnierung bereitzustellen, so dass der fertig imprägnierte Schlauch auf eine definierte Breite gebracht wird, bei der er auch in Axialrichtung eine Restdehnung aufweist.

Zur Lösung dieser Aufgabe stellt die Erfindung ein Verfahren zur Imprägnierung eines Geflechtsschlauchs bereit, wobei der Geflechtsschlauch in einem Zustand imprägniert wird, in welchem der Geflechtsschlauch einen Flechtwinkel von 30° bis 45° aufweist. Ein Geflechtsschlauch neigt bei der kontinuierlichen Förderung entlang seiner Schlauchachse zur Dehnung, wobei der Grad der Dehnung in Abhängigkeit von der einwirkenden Zugkraft variiert. Dabei verändert sich der Flechtwinkel des Geflechtsschlauchs uneinheitlich und verringert sich unter einen Wert von 30°, so dass keine axiale Restdehnung der Struktur vorhanden ist. Der nominale Flechtwinkel des Geflechtsschlauchs beträgt vorzugsweise von 30° bis 45°, bevorzugt von 35° bis 43°. Versuche mit dem der Erfindung zugrunde liegenden Geflecht haben ergeben, dass ein Flechtwinkel α von 35° einen spannungsfreien Zustand darstellt. Der für den erfindungsgemäßen Schlauch bevorzugte Bereich des nominalen Flechtwinkels bewegt sich zwischen 30° und 45°. Der ideale Bereich liegt zwischen 35° und 43°. Eine Maximalabweichung des Flechtwinkels vom nominalen Flechtwinkel über eine Schlauchlänge von 1 m beträgt vorzugsweise maximal +/- 3°, bevorzugt maximal +/- 2°, besonders bevorzugt maximal +/- 1°. Bezüglich des Aufnahmevermögens des Geflechts haben jüngste Versuche gezeigt, dass eine Flottenaufnahme bis zu 150% möglich ist. Bei Versuchsteilen hat sich eine Flottenaufnahme von 125% eingestellt. Die Einhaltung des nominalen Flechtwinkels kann auf verschiedene Wege sichergestellt werden: Einerseits kann der Geflechtsschlauch vor der Imprägnierung entlang seiner Schlauchachse gestaucht werden, wobei der Flechtwinkel mit einer mechanischen Staucheinrichtung gezielt auf den gewünschten Wert eingestellt wird. Eine andere Alternative umfasst die Verwendung eines Dehnungsbegrenzungsmittels, welches die Dehnung des Geflechtsschlauchs entlang seiner Schlauchachse während des Imprägniervorgangs zumindest vorübergehend verhindert, so dass der nominale Flechtwinkel des Geflechtsschlauchs im Moment der Imprägniermittelaufnahme vorübergehend fixiert wird. Dabei wird zunächst mittels eines triaxialen Rundgeflechts eine Struktur erzeugt, die im Flechtprozess quasi eine gestauchte Struktur erhält und anschließend imprägniert wird. Aufgrund des Dehnungsbegrenzungsmittels in Gestalt von Stehfäden, die in Umfangsrichtung des Schlauchs gleichmäßig beabstandet sind und sich parallel zur Schlauchachse erstrecken, ist der so entstandene Schlauch nicht dehnbar. Wenn man aber die Stehfäden herauszieht, so wird dieses Produkt die gleichen Eigenschaften aufweisen, wie ein Schlauch, der vor der Imprägnierung gestaucht wurde. Technisch möglich wird so eine Vorgehensweise nach dem Zuschneiden der Textilschläuche. Eine entsprechende Vorbehandlung der Stehfäden könnte dafür sorgen, dass diese nicht an der Imprägnierung haften.

Ein weiterer Aspekt der Erfindung betrifft ein Verfahren zur Imprägnierung eines Textilschlauchs, umfassend die Schritte:
- Bereitstellen eines Textilschlauchs mit einem Dehnungsbegrenzungsmittel, welches eine Dehnung des Textilschlauchs entlang der Schlauchachse begrenzt,
- Imprägnieren des mit dem Dehnungsbegrenzungsmittel versehenen Textilschlauchs.

Das Dehnungsbegrenzungsmittel begrenzt oder verhindert während des Imprägniervorgangs vorübergehend die Dehnung des Textilschlauchs entlang seiner Schlauchachse, so dass der Textilschlauch im gewünschten, ungedehnten Zustand, in welchem eine gleichmäßige und optimale Flottenaufnahme sichergestellt ist, imprägniert werden kann. Nach Abschluss des Imprägniervorgangs kann der nach dem erfindungsgemäßen Verfahren gefertigte Textilschlauch ebenfalls gedehnt werden, weist aber aufgrund der optimalen und gleichmäßigen Flottenaufnahme gute Elastizitätseigenschaften im Gegensatz zu einem nach herkömmlichem Verfahren gefertigten Textilschlauch auf. Das erfindungsgemäße Verfahren ist auf jede Textilart anwendbar, insbesondere auf ein Gewebe, Gestrick, Geflecht, Gewirke oder dergleichen.

In einer vorteilhaften Weiterbildung der Erfindung wird der Textilschlauch geflochten. Ein Geflechtsschlauch kann in einem kontinuierlichen Verfahren unter dem Einsatz einer Flechtmaschine gefertigt und mit kontinuierlichem Vorschub entlang seiner Schlauchachse dem nachfolgenden Schritt der Imprägnierung zugeführt werden. Dieses Verfahren erweist sich als besonders zeit- und kostensparend. Imprägnierte Geflechtsschläuche zeichnen sich aufgrund der Flexibilität der Gewebestruktur überdies durch besondere Belastbarkeit und Robustheit aus.

In einer weiteren vorteilhaften Ausführung der Erfindung wird der Textilschlauch in einem Zustand bereitgestellt und/oder imprägniert, in welchem sich das Dehnungsbegrenzungsmittel strangförmig im Wesentlichen parallel zur Schlauchachse erstreckt. Ein strangförmiges Dehnungsbegrenzungsmittel kann in einem kontinuierlichen Fertigungsverfahren leicht in eine textile Schlauchstruktur integriert werden, und nach Abschluss des Imprägniervorgangs leicht wieder entfernt werden.

Es kann sich als praktisch erweisen, wenn der Textilschlauch in einem Zustand bereitgestellt und/oder imprägniert wird, in welchem das Dehnungsbegrenzungsmittel in radialer Richtung zwischen zwei Fasersträngen angeordnet ist. Dadurch kann das Dehnungsbegrenzungsmittel für den Zeitraum der Beaufschlagung mit dem Imprägniermittel, sei es durch Tränken in einem Beschichtungsbad oder durch Aufsprühen des Imprägniermittels, optimal positioniert werden.

Es kann von Vorteil sein, wenn der Textilschlauch in einem Zustand bereitgestellt und/oder imprägniert wird, in welchem derselbe Faserstrang immer radial innerhalb oder immer radial außerhalb desselben Dehnungsbegrenzungsmittels angeordnet ist, vorzugweise derselbe Faserstrang dasselbe Dehnungsbegrenzungsmittel immer radial innerhalb oder immer radial außerhalb kreuzt. Dieser regelmäßige Schlauchaufbau gewährleistet entlang der Schlauchachse eine gleichmäßige und optimale Flotteaufnahme, und erleichtert das Entfernen des Dehnungsbegrenzungsmittels nach Abschluss des Imprägniervorgangs.

Es kann nützlich sein, wenn der Textilschlauch in einem Zustand bereitgestellt und/oder imprägniert wird, in welchem derselbe Faserstrang immer radial innerhalb eines ersten Dehnungsbegrenzungsmittels und immer radial außerhalb eines zweiten Dehnungsbegrenzungsmittels angeordnet ist, vorzugweise das erste Dehnungsbegrenzungsmittel immer radial innerhalb und das zweite Dehnungsbegrenzungsmittel immer radial außerhalb kreuzt. In dieser Ausführung umfasst das Dehnungsbegrenzungsmittel eine Vielzahl paralleler Stehfäden, die in Umfangsrichtung des Schlauchs gleichmäßig voneinander beabstandet sind und sich parallel zur Schlauchachse erstrecken. Dieser regelmäßige Schlauchaufbau gewährleistet auch in Umfangsrichtung des Textilschlauchs eine gleichmäßige und optimale Flotteaufnahme.

In einer vorteilhaften Weiterbildung der Erfindung wird der Textilschlauch in einem Zustand bereitgestellt und/oder imprägniert, in welchem Kreuzungspunkte der Faserstränge im Wesentlichen auf einer sich parallel zur Schlauchachse erstreckenden Linie angeordnet sind und das Dehnungsbegrenzungsmittel die Kreuzungspunkte der Faserstränge durchläuft. In dieser Ausführung kann sichergestellt werden, dass das Dehnungsbegrenzungsmittel zumindest vorübergehend während des Imprägniervorgangs optimal positioniert ist.

In einer weiteren vorteilhaften Weiterbildung der Erfindung wird das Dehnungsbegrenzungsmittel nach der Imprägnierung, vorzugsweise nach dem Zuschneiden des Textilschlauchs, zumindest teilweise, vorzugsweise vollständig, entfernt oder funktionsuntüchtig gemacht. Dadurch kann sichergestellt werden, dass der Textilschlauch nach Abschluss des Imprägniervorgangs hervorragende Elastizitätseigenschaften aufweist.

Es kann hilfreich sein, wenn das Dehnungsbegrenzungsmittel vorbehandelt wird, um eine Haftfähigkeit des Imprägniermittels zu verringern. Durch diese Maßnahme kann das Dehnungsbegrenzungsmittel nach Abschluss des Imprägniervorgangs leichter entfernt werden.

Ein weiterer Aspekt der Erfindung betrifft einen Textilschlauch mit einem lösbaren Dehnungsbegrenzungsmittel. Dieser erfindungsgemäße Textilschlauch stellt ein Halbzeug für das erfindungsgemäße Verfahren zur Imprägnierung eines Textilschlauchs dar. Das Dehnungsbegrenzungsmittel begrenzt oder verhindert während des Imprägniervorgangs vorübergehend die Dehnung des Textilschlauchs entlang seiner Schlauchachse, so dass der Textilschlauch im gewünschten, ungedehnten Zustand, in welchem eine gleichmäßige und optimale Flottenaufnahme sichergestellt ist, imprägniert werden kann. Da das Dehnungsbegrenzungsmittel lösbar ist, kann es nach Abschluss des Imprägniervorgangs leicht entfernt werden, so dass der imprägnierte Textilschlauch hervorragende Elastizitätseigenschaften aufweist. Aufgrund der optimalen und gleichmäßigen Flottenaufnahme, die durch das Dehnungsbegrenzungsmittel sichergestellt wird, weist der imprägnierte Textilschlauch bessere Elastizitätseigenschaften auf als ein herkömmlicher imprägnierter Textilschlauch. Der Textilschlauch kann beispielsweise ein Gewebe, Gestrick, Geflecht, Gewirke oder dergleichen aufweisen.

Es kann sich als vorteilhaft erweisen, wenn der Textilschlauch als Geflechtsschlauch ausgebildet ist. Wie eingangs erwähnt kann ein Geflechtsschlauch in einem kontinuierlichen Verfahren unter dem Einsatz einer Flechtmaschine kostengünstig gefertigt werden und zeichnet sich durch hervorragende Elastizitätseigenschaften aus. Allerdings neigt der Geflechtsschlauch bei der kontinuierlichen Förderung entlang seiner Schlauchachse aufgrund der einwirkenden Zugkraft zur Dehnung, wobei sich der Flechtwinkel des Geflechtsschlauchs uneinheitlich verändert und unter einen Wert von 30° verringert. Eine optimale und einheitliche Flottenaufnahme kann dann nicht mehr gewährleistet werden. Der nominale Flechtwinkel des erfindungsgemäßen Geflechtsschlauchs reicht jedoch von 30° bis 45°, bevorzugt von 35° bis 43°, wobei die Maximalabweichung des Flechtwinkels vom nominalen Flechtwinkel über eine Schlauchlänge von 1 m maximal +/- 3°, vorzugsweise maximal +/- 2°, bevorzugt maximal +/-1° beträgt. Dadurch kann eine optimale und einheitliche Flottenaufnahme erreicht werden.

Es kann hilfreich sein, wenn das Dehnungsbegrenzungsmittel strangförmig ausgebildet ist und sich im Wesentlichen parallel zur Schlauchachse erstreckt. Das Dehnungsbegrenzungsmittel umfasst vorzugsweise eine Vielzahl auf Zug belastbarer, im wesentlichen undehnbarer Standfäden mit Flechtwinkel von 0°, die sich parallel zur Schlauchachse erstrecken und in Umfangsrichtung des Schlauchs in regelmäßigen Abständen angeordnet sind. Diese Standfäden können parallel zur Schlauchachse herausgezogen werden.

### Kurze Beschreibung der Zeichnungen

Es zeigen:
- Fig. 1: einen Geflechtsschlauch bzw. ein biaxiales Rundgeflecht ohne Dehnungsbegren- zungsmittel
- Fig. 2: einen Geflechtsschlauch bzw. ein triaxiales Rundgeflecht mit parallel zur Schlauch- achse erstreckenden Standfäden als Dehnungsbegrenzungsmittel

### Detaillierte Beschreibung der Erfindung

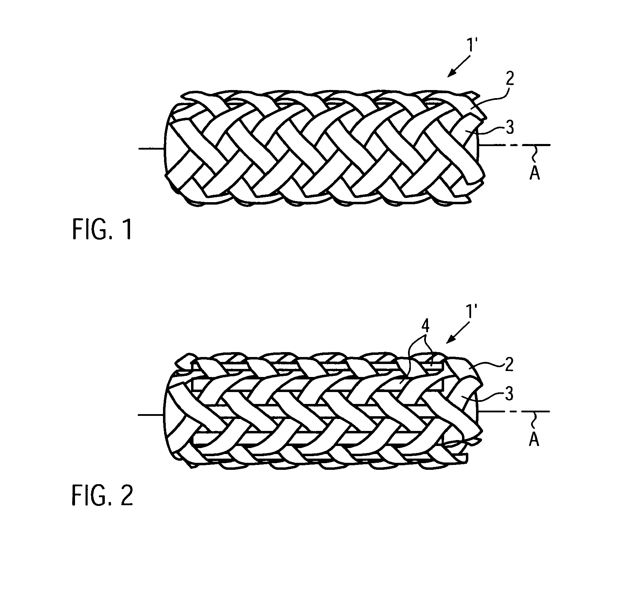

Fig. 1 zeigt einen Geflechtsschlauch 1 bzw. ein biaxiales Rundgeflecht ohne Dehnungsbegrenzungsmittel.

Fig. 2 zeigt einen erfindungsgemäßen Geflechtsschlauch 1 mit parallel zur Schlauchachse erstreckenden Standfäden 4 als lösbares Dehnungsbegrenzungsmittel in einem Zustand, in welchem der Geflechtsschlauch 1 bereitgestellt und imprägniert wird. Der erfindungsgemäße Geflechtsschlauch 1 bildet ein triaxiales Rundgeflecht. Die Standfäden 4 sind in radialer Richtung zwischen zwei Flechtsträngen 2, 3 des Geflechtsschlauchs 1 angeordnet, wobei derselbe Flechtstrang 2, 3 immer radial innerhalb oder immer radial außerhalb derselben Standfadens 4 angeordnet ist, bzw. derselbe Flechtstrang 2, 3 denselben Standfaden 4 immer radial innerhalb oder immer radial außerhalb kreuzt. Die Bezeichnung "radial" bezieht sich jeweils auf die Schlauchachse A. Im Umfangsrichtung verläuft derselbe Flechtstrang 2, 3 immer radial innerhalb eines ersten Standfadens 4 und immer radial außerhalb eines zweiten, benachbarten Standfadens 4 oder umgekehrt, wobei derselbe Flechtstrang 2, 3 benachbarte Standfäden 4 abwechselnd radial innerhalb und radial außerhalb kreuzt. Die Kreuzungspunkte der Faserstränge 2, 3 sind im Wesentlichen auf parallel zur Schlauchachse A erstreckenden Linien angeordnet, wobei jeder Standfaden 4 die auf einer parallel zur Schlauchachse A erstreckenden Linie angeordneten Kreuzungspunkte der Faserstränge 2, 3 durchläuft. Durch diesen Schlauchaufbau können die Standfäden 4 lösbar und im Wesentlichen parallel zur Schlauchachse A herausziehbar zwischen den Fasersträngen 2, 3 des Textilschlauchs 1 gehalten werden.

Das erfindungsgemäße Verfahren zur Imprägnierung eines Geflechtsschlauchs wird nachfolgend beschrieben:

Im dargestellten Zustand gemäß Fig. 1 wird der Geflechtsschlauch 1 imprägniert, wobei der Geflechtsschlauch 1 einen Flechtwinkel α von 30° bis 45°, vorzugsweise 35° bis 43° aufweist. Dabei wird der Geflechtsschlauch 1 in einem kontinuierlichen Verfahren in einer Foulardiervorrichtung vorzugsweise mittels Walzen in Vorschubrichtung in ein Beschichtungsbad gezogen oder in anderer Weise mit Imprägniermittel beaufschlagt. Durch die Standfäden 4 werden die Faserstränge 2, 3 zueinander fixiert. Folglich kann der Geflechtsschlauch 1 nicht entlang der Schlauchachse A gedehnt werden und der Flechtwinkel kann nicht geändert werden. Überschüssiges Imprägniermittel kann nachträglich unter Verwendung eines Foulards abgequetscht werden. Die Vorschubgeschwindigkeit des Geflechtsschlauchs 1, die Flottenaufnahme und/oder andere verfahrenserhebliche Parameter werden vorzugsweise sensorgestützt überwacht und über eine Steuereinrichtung elektronisch geregelt und/oder gesteuert.

Nach der Imprägnierung wird der Textilschlauch 1 in diskrete Schlauchlängen zerschnitten. Dabei werden die Standfäden 4 funktionsuntüchtig gemacht. Anschließend werden die Standfäden 4 vorzugsweise im Wesentlichen parallel zur Schlauchachse A einzeln zwischen den Fasersträngen 2, 3 des Textilschlauchs 1 herausgezogen. Um die Haftfähigkeit des Imprägniermittels an den Standfäden 4 zu verringern, werden die Standfäden 4 vorzugsweise mit entsprechenden Mitteln vorbehandelt.

## Patentansprüche

1. Verfahren zur Imprägnierung eines Geflechtsschlauchs (1), **dadurch gekennzeichnet, dass** der Geflechtsschlauch (1) in einem Zustand imprägniert wird, in welchem der Geflechtsschlauch (1) einen Flechtwinkel (α) von 30° bis 45° aufweist.

2. Verfahren nach Anspruch 1, **dadurch gekennzeichnet, dass** der Geflechtsschlauch (1) in einem Zustand imprägniert wird, in welchem der Geflechtsschlauch (1) einen Flechtwinkel von 35° bis 43° aufweist.

3. Verfahren zur Imprägnierung eines Textilschlauchs (1), umfassend die Schritte:
a. Bereitstellen eines Textilschlauchs (1) mit einem Dehnungsbegrenzungsmittel (4), welches eine Dehnung des Textilschlauchs (1) entlang der Schlauchachse (A) begrenzt,
b. Imprägnieren des mit dem Dehnungsbegrenzungsmittel (4) versehenen Textilschlauchs (1).

4. Verfahren nach Anspruch 3, **dadurch gekennzeichnet, dass** der Textilschlauch (1) geflochten wird.

5. Verfahren nach zumindest einem der vorangegangenen Ansprüche, **dadurch gekennzeichnet, dass** der Textilschlauch (1) in einem Zustand bereitgestellt und/oder imprägniert wird, in welchem sich das Dehnungsbegrenzungsmittel (4) strangförmig im Wesentlichen parallel zur Schlauchachse (A) erstreckt.

6. Verfahren nach zumindest einem der vorangegangenen Ansprüche, **dadurch gekennzeichnet, dass** der Textilschlauch (1) in einem Zustand bereitgestellt und/oder imprägniert wird, in welchem das Dehnungsbegrenzungsmittel (4) in radialer Richtung zwischen zwei Fasersträngen (2, 3) angeordnet ist.

7. Verfahren nach zumindest einem der vorangegangenen Ansprüche, **dadurch gekennzeichnet, dass** der Textilschlauch (1) in einem Zustand bereitgestellt und/oder imprägniert wird, in welchem derselbe Faserstrang (2; 3) immer radial innerhalb oder immer radial außerhalb desselben Dehnungsbegrenzungsmittels (4) angeordnet ist, vorzugweise derselbe Faserstrang (2; 3) dasselbe Dehnungsbegrenzungsmittel (4) immer radial innerhalb oder immer radial außerhalb kreuzt.

8. Verfahren nach zumindest einem der vorangegangenen Ansprüche, **dadurch gekennzeichnet, dass** der Textilschlauch (1) in einem Zustand bereitgestellt und/oder imprägniert wird, in welchem derselbe Faserstrang (2; 3) immer radial innerhalb eines ersten Dehnungsbegrenzungsmittels (4) und immer radial außerhalb eines zweiten Dehnungsbegrenzungsmittels (4) angeordnet ist, und vorzugweise das erste Dehnungsbegrenzungsmittel (4) immer radial innerhalb und das zweite Dehnungsbegrenzungsmittel (4) immer radial außerhalb kreuzt.

9. Verfahren nach zumindest einem der vorangegangenen Ansprüche, **dadurch gekennzeichnet, dass** der Textilschlauch (1) in einem Zustand bereitgestellt und/oder imprägniert wird, in welchem Kreuzungspunkte der Faserstränge (2; 3) im wesentlichen auf einer sich parallel zur Schlauchachse (A) erstreckenden Linie angeordnet sind und das Dehnungsbegrenzungsmittel (4) die Kreuzungspunkte der Faserstränge (2; 3) durchläuft.

10. Verfahren nach zumindest einem der vorangegangenen Ansprüche, **dadurch gekennzeichnet, dass** das Dehnungsbegrenzungsmittel (4) nach der Imprägnierung zumindest teilweise, vorzugsweise vollständig, entfernt wird oder funktionsuntüchtig gemacht wird.

11. Verfahren nach zumindest einem der vorangegangenen Ansprüche, **dadurch gekennzeichnet, dass** das Dehnungsbegrenzungsmittel (4) vorbehandelt wird, um eine Haftfähigkeit des Imprägniermittels zu verringern.

12. Textilschlauch (1) mit einem lösbaren Dehnungsbegrenzungsmittel (4).

13. Textilschlauch (1) nach Anspruch 12, **dadurch gekennzeichnet, dass** der Textilschlauch (1) als Geflechtsschlauch ausgebildet ist.

14. Textilschlauch (1) nach Anspruch 12 oder 13, **dadurch gekennzeichnet, dass** das Dehnungsbegrenzungsmittel (4) strangförmig ausgebildet ist und sich im Wesentlichen parallel zur Schlauchachse (A) erstreckt.

15. Textilschlauch nach einem der Ansprüche 12 bis 14, **dadurch gekennzeichnet, dass** das Dehnungsbegrenzungsmittel (4) herausziehbar zwischen zwei Fasersträngen (2; 3) des Textilschlauchs (1) angeordnet ist.
